(19) Europäisches Patentamt
European Patent Office
Office européen des brevets

(11) **EP 3 940 665 A1**

(12) **EUROPEAN PATENT APPLICATION**

(43) Date of publication:
**19.01.2022 Bulletin 2022/03**

(21) Application number: **21179045.6**

(22) Date of filing: **11.06.2021**

(51) International Patent Classification (IPC):
***G08G 1/00*** *(2006.01)*

(52) Cooperative Patent Classification (CPC):
**G08G 1/0133;** G06N 3/02; G08G 1/0112;
G08G 1/0116; G08G 1/0129; G08G 1/0141;
G08G 1/0145; G08G 1/015; G08G 1/04;
G08G 1/052; G08G 1/056

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **18.11.2020 CN 202011298371**

(71) Applicant: **Baidu (China) Co., Ltd.
200041 Shanghai (CN)**

(72) Inventor: **TAN, Xiao
SHANGHAI, 200041 (CN)**

(74) Representative: **Laqua, Bernd Christian Kurt
Wuesthoff & Wuesthoff
Patentanwälte PartG mbB
Schweigerstraße 2
81541 München (DE)**

(54) **DETECTION METHOD FOR TRAFFIC ANOMALY EVENT, APPARATUS, PROGRAM AND MEDIUM**

(57) The present disclosure provides a detection method for a traffic anomaly event, a traffic management and control method, a device, and a medium, which relate to the technical filed of artificial intelligence, specifically, deep learning, intelligent transportation, and computer vision technologies. The detection method comprises: acquiring target traveling parameters of at least some traffic elements in a target traffic scenario corresponding to a target moment; determining a real traveling feature of each traffic element of the at least some traffic elements based on corresponding target traveling parameters; predicting a predictive traveling feature of a target traffic element in the at least some traffic elements based on real traveling features of traffic elements other than the target traffic element in the at least some traffic elements; and determining, based on the real traveling feature of the target traffic element and the predictive traveling feature of the target traffic element, whether an anomaly event for the target traffic element is present at the target moment.

Fig. 1

EP 3 940 665 A1

## Description

Technical Field

The present disclosure relates to the technical filed of artificial intelligence, specifically, deep learning, intelligent transportation, and computer vision technologies, and in particular, relates to a detection method for a traffic anomaly event, a traffic management and control method, a device, and a medium.

Background

Artificial intelligence is a subject on making a computer to simulate some thinking processes and intelligent behaviors (such as learning, reasoning, thinking, and planning) of a human, and involves both hardware-level technologies and software-level technologies. Artificial intelligence hardware technologies generally include the fields such as sensors, dedicated artificial intelligence chips, cloud computing, distributed storage, and big data processing. Artificial intelligence software technologies mainly include the following several general directions: computer vision technologies, speech recognition technologies, natural language processing technologies, and machine learning/deep learning, big data processing technologies, and knowledge graph technologies. Artificial intelligence has increasingly wide applications in various fields, such as intelligent transportation.

The methods described in this section are not necessarily methods that have been previously conceived or employed. It should not be assumed that any of the methods described in this section are considered to be the prior art just because they are included in this section, unless otherwise indicated expressly. Similarly, the problem mentioned in this section should not be considered to be universally recognized in any prior art, unless otherwise indicated expressly.

Summary

According to an aspect of the present disclosure, a detection method for a traffic anomaly event is provided, the detection method comprising: acquiring target traveling parameters of at least some traffic elements in a target traffic scenario corresponding to a target moment; determining a real traveling feature of each traffic element of the at least some traffic elements based on corresponding target traveling parameters; predicting a predictive traveling feature of a target traffic element in the at least some traffic elements based on real traveling features of traffic elements other than the target traffic element in the at least some traffic elements; and determining, based on the real traveling feature of the target traffic element and the predictive traveling feature of the target traffic element, whether an anomaly event for the target traffic element is present at the target moment.

According to another aspect of the present disclosure, a detection apparatus for a traffic anomaly event is further provided, the detection apparatus comprising: an acquisition unit configured to acquire target traveling parameters of at least some traffic elements in a target traffic scenario corresponding to a target moment; a first determination unit configured to determine a real traveling feature of each traffic element of the at least some traffic elements based on corresponding target traveling parameters; a prediction unit configured to predict a predictive traveling feature of a target traffic element in the at least some traffic elements based on real traveling features of traffic elements other than the target traffic element in the at least some traffic elements; and a second determination unit configured to determine, based on the real traveling feature of the target traffic element and the predictive traveling feature of the target traffic element, whether an anomaly event for the target traffic element is present at the target moment.

According to another aspect of the present disclosure, a computer-readable storage medium storing a program is further provided, the program comprising instructions that, when executed by a processor of an electronic device, cause the electronic device to perform the foregoing method.

According to another aspect of the present disclosure, there is provided a computer program comprising instructions, which when the program is executed by a computer, cause the computer to carry out the foregoing method.

In the present disclosure, real traveling features of other traffic elements in a traffic scenario are used to predict a predictive traveling feature of a target traffic element, and because traveling states of traffic elements in the traffic scenario affect each other, it can be determined, based on the predictive traveling feature and a real traveling feature of the target traffic element, whether an anomaly event for the target traffic element is present. The present disclosure can determine, based on the real traveling parameters of the traffic elements in the traffic scenario, whether an anomaly event is present, and therefore has a strong generalization capability, low costs, and high accuracy.

Brief Description of the Drawings

The drawings exemplarily show embodiments and form a part of the specification, and are used to explain exemplary implementations of the embodiments together with a written description of the specification. The embodiments shown are merely for illustrative purposes and do not limit the scope of the claims. Throughout the drawings, like reference signs denote like but not necessarily identical elements.

Fig. 1 is a flowchart showing a detection method for a traffic anomaly event according to an exemplary embodiment;

Fig. 2 is a flowchart showing determination of a real traveling feature of a target traffic element according to an exemplary embodiment;

Fig. 3 is a flowchart showing a principle for determining a real traveling feature of a traffic element at a target moment by using a recurrent neural network according to an exemplary embodiment;

Fig. 4 is a flowchart showing a principle for constructing a graph neural network according to an exemplary embodiment;

Fig. 5 is a schematic composition block diagram showing a detection apparatus for a traffic anomaly event according to an exemplary embodiment; and

Fig. 6 is a structural block diagram showing an exemplary computing device that can be applied to an exemplary embodiment.

Detailed Description

In the present disclosure, unless otherwise stated, the terms "first", "second", etc., used to describe various elements are not intended to limit the positional, temporal or importance relationship of these elements, but rather only to distinguish one component from another. In some examples, the first element and the second element may refer to the same instance of the element, and in some cases, based on contextual descriptions, the first element and the second element may also refer to different instances.

The terms used in the description of the various examples in the present disclosure are merely for the purpose of describing particular examples, and are not intended to be limiting. If the number of elements is not specifically defined, it may be one or more, unless otherwise expressly indicated in the context. Moreover, the term "and/or" used in the present disclosure encompasses any of and all possible combinations of listed items.

In an intelligent transportation technology, traffic anomaly events, such as vehicle collision and stopping a vehicle on a driving lane for a long time, may cause a severe traffic jam and impede normal traffic that, if unsolved for a long time, may cause a secondary accident. Therefore, the detection of an anomaly event is an important part of the intelligent transportation technology, such that accident rescue and road clearing can be performed more accurately. In addition, statistics on a traffic flow at a road intersection can be collected, which provides a basis for signal control strategy planning in an intelligent traffic light system and improves the traffic efficiency. In addition, the detection of an anomaly event is also an important part of an automated driving technology, such that important information can be provided for path planning in an automated driving system, so as to assist an unmanned vehicle in path planning and improve the security of the automated driving system.

In the related art, a neural network or a conventional visual processing method is used to perform feature extraction on video signals to obtain semantic expressions of events occurring in videos, and then a classifier in a neural network or conventional machine learning is used to classify the semantic expressions to obtain a classification result of videos in which an anomaly event exists and videos in which no anomaly event exists. Such a video classification-based manner requires a large number of video with anomaly events for training and learning, which is not operable in practice, since anomaly events are relatively small probability events, and it is difficult to collect a large amount of anomaly data for training and learning. In addition, backgrounds in which anomaly events occur are diverse. Therefore, a generalization capability of this manner is not strong, and generally, use effects of a model obtained by training in one type of traffic scenario are significantly reduced in another type of traffic scenario.

The applicant finds that traveling states of traffic elements in a traffic scenario affect each other. For example, if other traffic elements in the same traffic scenario are in a stopped state, and a target traffic element is also in a stopped state, the target traffic element may encounter a traffic jam or a traffic light indicating to stop. If the other traffic elements in the same traffic scenario are in a moving state, and the target traffic element is in a stopped state, the target traffic element is very likely to encounter an anomaly event.

Based on this, the present disclosure provides a detection method for a traffic anomaly event by acquiring target traveling parameters of a traffic element in a target traffic scenario and determining a real traveling feature of the traffic element based on the target traveling parameters. Because traveling states of traffic elements in the traffic scenario affect each other, a predictive traveling feature of a target traffic element can be predicted based on real traveling features of other traffic elements in the traffic scenario. Therefore, it can be determined, based on the predictive traveling feature and a real traveling feature of the target traffic element, whether an anomaly event for the target traffic element is present. The present disclosure can determine, based on only the real traveling parameters of the traffic elements in the traffic scenario, whether an anomaly event is present, and therefore has a strong generalization capability, low costs, and high accuracy.

The detection method for a traffic anomaly event of the present disclosure will be further described below with reference to the accompanying drawings.

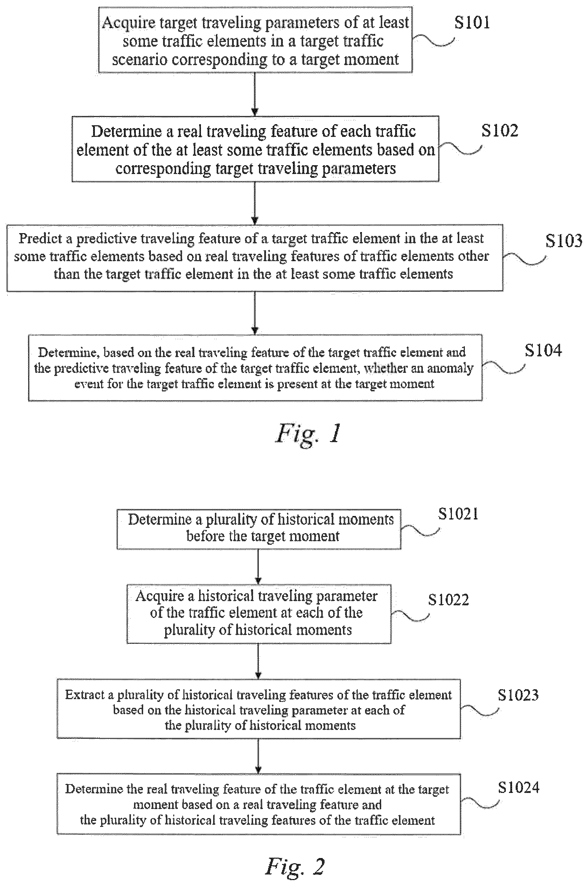

Fig. 1 is a flowchart showing a detection method for a traffic anomaly event according to an exemplary embodiment of the present disclosure. As shown in Fig. 1, the detection method for a traffic anomaly event comprises: step S101: acquiring target traveling parameters of at least some traffic elements in a target traffic scenario corresponding to a target moment; step S102: determining a real traveling feature of each traffic element of the at least some traffic elements based on corresponding target traveling parameters; step S103: predicting a predictive traveling feature of a target traffic element in the at least some traffic elements based on real traveling features of a traffic elements other than the target traffic element in the at least some traffic elements; and step S104: determining, based on the real traveling feature of the target traffic element and the predictive traveling feature of the target traffic element, whether an anomaly event for the target traffic element is present at the target moment. Therefore, the predictive traveling feature of the target traffic element can be predicted by acquiring the target traveling parameters of the traffic elements in the target traffic scenario corresponding to the target moment, determining the real traveling features of the traffic elements based on the target traveling parameters. Based on real traveling features of other traffic elements in the traffic scenario, the predictive traveling feature of the target traffic element can be determined. Therefore, it can be determined, based on the predictive traveling feature and a real traveling feature of the target traffic element, whether an anomaly event for the target traffic element is present at the target moment. As long as an anomaly event is present in one traffic element in the target traffic scenario, it is determined that there is an anomaly event in the target traffic scenario. The present disclosure can determine, based on only the target traveling parameters of the traffic elements in the traffic scenario, whether an anomaly event is present, and therefore has a strong generalization capability, low costs, and high accuracy.

The traffic element may include at least one of the following elements: a vehicle, a non-motor vehicle, and a pedestrian.

The target traveling parameters of the traffic element may include, but is not limited to, at least one of: a type of a traffic element, a location parameter, a traveling direction, or a traveling speed. Other parameters that affect whether an anomaly event is present in the traffic element may also be included, to further improve the accuracy of a detection result. For example, a size parameter of the traffic element may also be included.

According to some embodiments, when the traveling parameters comprise a type and a size parameter of a traffic element, step S101 of acquiring target traveling parameters of at least some traffic elements in a target traffic scenario corresponding to a target moment may comprise: acquiring a target image of the target traffic scenario at the target moment; inputting the target image to a first convolutional neural network, and acquiring respective bounding boxes surrounding respective ones of the traffic elements and respective types of the respective ones of the traffic elements output by the first convolutional neural network; and determining respective size parameters of the respective ones of the traffic elements based on the respective bounding boxes surrounding the respective ones of the traffic elements in the target image. Therefore, the convolutional neural network can be used to quickly determine types and size parameters of traffic elements comprised in the target traffic scenario.

According to some embodiments, when the target traveling parameters comprise a traveling direction and a traveling speed of a traffic element, step S101 may further comprise: capturing two consecutive frames of pictures from a video that includes the target traffic scenario, wherein a difference between the target moment and a timestamp of each of the two consecutive frames of pictures is less than specified duration, and the two consecutive frames of pictures each comprise the respective ones of the traffic elements; and determining a traveling speed and a traveling direction of each of the traffic elements based on the two consecutive frames of pictures. Therefore, the traveling speed and the traveling direction of the traffic element can be determined by using the two consecutive frames of pictures comprising the traffic element, and calculation is simple and is easily implemented.

According to some embodiments, when the target traveling parameters comprise a location parameter of a traffic element, step S101 may further comprise: acquiring a calibration parameter of a camera that shoots the video; and calculating a location of each of the traffic elements based on the calibration parameter of the camera. Therefore, the location, traveling speed, and traveling direction of the traffic element all can be determined based on computer vision.

It should be noted that the manner of acquiring each traveling parameter of the traffic element is not limited herein. For example, it is also possible to acquire the location, traveling speed, and traveling direction of the traffic element based on GPS positioning data. It is also possible to add the type of traffic element to the GPS positioning data, so that the type, location, traveling speed, and traveling direction of the traffic element all can be acquired based on the GPS positioning data. A size parameter of a certain type of traffic element can also be preset, so that the size parameter of the traffic element can be determined after the type of the traffic element is acquired.

According to some embodiments, in step S102, feature coding may be performed on real traveling parameters of the traffic elements (for example, a traveling parameter at a current moment). For example, the type of the traffic element may be coded as: a vehicle (100), a non-motor vehicle (010), and a pedestrian (001). It is possible to use, but not limited to, a second convolutional neural network to perform feature extraction on a feature code of each of the at least some traffic elements, to obtain a traveling feature $F_i^t$ of each traffic element, where i represents an i$^{th}$ traffic element (which may be a vehicle, a non-motor vehicle, or a pedestrian) in the target traffic scenario, and t represents the target moment corresponding to the real traveling parameters. In this case, the detection method may further comprise: inputting the target traveling parameters to a second convolutional neural network, and extracting feature vectors of the target traveling parameters by using the second convolutional neural network, wherein the traveling feature of each of the at least some traffic elements is determined based on a feature vector of corresponding real traveling parameters.

According to some embodiments, the traveling feature $F_i^t$ obtained above may be used as the real traveling feature of the traffic element.

According to some embodiments, as shown in Fig. 2, step S102 of determining a real traveling feature of each traffic element of the at least some traffic elements based on corresponding target traveling parameters may comprise: step 1021: determining a plurality of historical moments before the target moment; step 1022: acquiring a historical traveling parameter of the traffic element at each of the plurality of historical moments; step 1023: extracting a plurality of historical traveling features of the traffic element based on the historical traveling parameter at each of the plurality of historical moments; and step 1024: determining the real traveling feature of the traffic element at the target moment based on the traveling feature and the plurality of historical traveling features of the traffic element. In this way, the real traveling feature of the traffic element in the time dimension can be acquired, the real traveling feature of the traffic element at the target moment can be expressed more accurately, and the accuracy of detecting whether an anomaly event is present in the target traffic element can be improved.

For example, if the traffic element is in a stopped state at the target moment, and is also in a stopped state at a plurality of historical moments before the target moment, it can be determined that a real traveling state of the traffic element at the target moment is stopping a vehicle for a long time. If the traffic element is in a stopped state at the target moment, but is in a moving state at a plurality of historical moments before the target moment, it can be determined that a real traveling state of the traffic element at the target moment is encountering a traffic jam or a traffic light to stop.

In step 1023, the second convolutional neural network may be used to extract a plurality of historical traveling features of the target traffic element, and the specific method thereof is similar to the extraction method of the traveling feature $F_i^t$ of the traffic element and will not be described in detail herein.

In step 1024, the real traveling feature of the traffic element at the target moment may be determined by using a recurrent neural network (RNN) based on, but not limited to, the traveling feature and the plurality of historical traveling features of the traffic element.

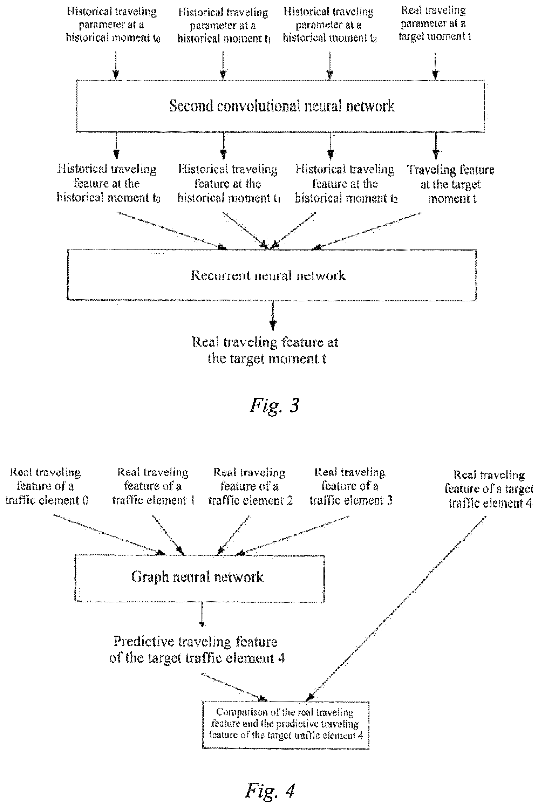

In the example illustrated in Fig. 3, historical traveling parameters of the traffic element at three historical moments $t_0$, $t_1$, and $t_2$ before the target moment t may be acquired, feature coding is separately performed on the historical traveling parameters at the three historical moments $t_0$, $t_1$, and $t_2$ and a real traveling parameter at the target moment t, and the second convolutional neural network is used to perform extraction to obtain historical traveling features at the three historical moments $t_0$, $t_1$, and $t_2$ and a traveling feature at the target moment t. Then, the historical traveling features at the three historical moments $t_0$, $t_1$, and $t_2$ and the traveling feature at the target moment t are input to the recurrent neural network (RNN) to obtain a real traveling feature $N_i^t$ at the target moment t, where i represents an $i^{th}$ traffic element (which may be a vehicle, a non-motor vehicle, or a pedestrian) in the target traffic scenario, and t represents the target moment. It should be noted that historical traveling parameters at one or two historical moments before the target moment, or the historical traveling parameters at three historical moments can alternatively be acquired to determine a real traveling feature of the traffic element in the time dimension at the target moment.

After the real traveling feature of each of the at least some traffic elements is determined, step S103 of predicting a predictive traveling feature of a target traffic element based on real traveling features of traffic elements other than the target traffic element in the at least some traffic elements may be performed.

According to some embodiments, the predictive traveling feature of the target traffic element may be predicted by using, but not limited to, a graph neural network (GNN) based on the real traveling features of the traffic elements other than the target traffic element in the at least some traffic elements. For example, a graph convolutional neural network may be selected as the graph neural network (GNN).

According to some embodiments, constructing the graph neural network may comprise: acquiring traveling parameters of at least some traffic element samples in a traffic scenario at a moment; extracting real traveling features of the at least some traffic element samples based on at least corresponding traveling parameters; establishing the graph neural network based on the real traveling features of the at least some traffic element samples at the moment; predicting a predictive traveling feature of a target traffic element sample by using the graph neural network based on real traveling features of traffic element samples other than the target traffic element sample in the at least some traffic element samples; and adjusting parameters of the graph neural network based on a real traveling feature of the target traffic element sample and the predictive traveling feature of the target traffic element sample. Iteration may be performed until the number of iterations reaches a specific number or a difference between the predictive traveling feature and the real traveling feature is less than a threshold, and then training of the graph neural network is completed.

In an exemplary embodiment illustrated in Fig. 4, a target traffic scenario comprising five traffic elements is taken as an example, a serial number of the target traffic element is set to 4, and real traveling features of the five traffic elements at the target moment t are determined (for a specific method, reference is made to the foregoing content). The graph neural network is constructed based on the real traveling features of the five traffic elements at the target moment t. Using the location of the target traffic element 4 as the coordinate center, a fully connected graph neural network can be established, Nodes of the GNN are all traffic elements, and corresponding real traveling features are used as features of the nodes. For a target traffic element node, its real traveling feature is removed, and then information transfer is performed on all nodes of the GNN at each moment for a specific number of times (usually only 5 to 6 times) to obtain a predictive traveling feature $G_i^t$ of the target traffic element node, where i is 4, and t denotes the target moment. A training goal of the GNN is to minimize a difference between the predictive traveling feature $G_i^t$ and the real traveling feature $N_i^t$ of the target traffic element 4.

After the predictive traveling feature $G_i^t$ and the real traveling feature $N_i^t$ of target traffic element 4 are determined, the predictive traveling feature $G_i^t$ and the real traveling feature $N_i^t$ may be compared. According to some embodiments, in step S104, in response to determining that an absolute difference between the real traveling feature $N_i^t$ of the target traffic element and the predictive traveling feature $G_i^t$ of the target traffic element is greater than a threshold, it may be determined that an anomaly event for the target traffic element is present at the target moment. In response to determining that an absolute difference between the real traveling feature of the target traffic element and the predictive traveling feature of the target traffic element is not greater than the threshold, it may be determined that no anomaly event for the target traffic element is present at the target moment.

In response to determining that an anomaly event for any traffic element is present in the target traffic scenario, it can be determined that an anomaly event is present in the target traffic scenario.

According to another aspect of the present disclosure, a traffic management and control method is further provided, and may comprise: detecting, by using the foregoing detection method, whether a traffic anomaly event occurs in a target traffic scenario; executing a corresponding traffic management and control strategy in response to detecting that the traffic anomaly event occurs in the target traffic scenario.

The traffic control strategy may be a traffic light control strategy, or may be issuing an alarm indication to implement accident rescue and road clearing. When the traveling parameters comprise a location of a traffic element, the location and time (that is, the target moment) at which the anomaly event occurs can be indicated.

According to another aspect of the present disclosure, an automated driving method is further provided, and may comprise: detecting, by using the foregoing detection method, whether a traffic anomaly event occurs in a target traffic scenario; executing a corresponding path planning strategy in response to detecting that the traffic anomaly event occurs in the target traffic scenario.

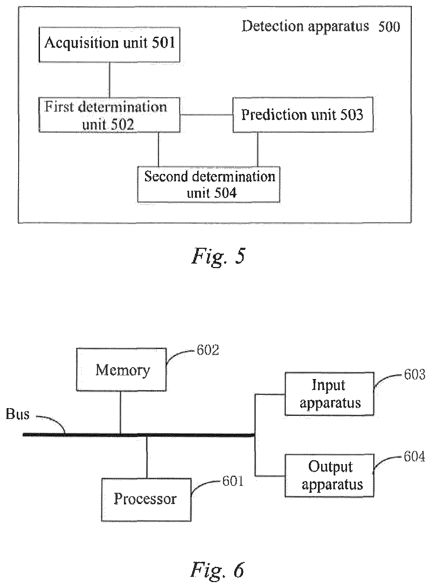

According to another aspect of the present disclosure, as shown in Fig. 5, a detection apparatus 500 for a traffic anomaly event is further provided, and may comprise: an acquisition unit 501 configured to acquire target traveling parameters of at least some traffic elements in a target traffic scenario corresponding to a target moment; a first determination unit 502 configured to determine a real traveling feature of each traffic element of the at least some traffic elements based on corresponding target traveling parameters; a prediction unit 503 configured to predict a predictive traveling feature of a target traffic element in the at least some traffic elements based on real traveling features of traffic elements other than the target traffic element in the at least some traffic elements; and a second determination unit 504 configured to determine, based on the real traveling feature of the target traffic element and the predictive traveling feature of the target traffic element, whether an anomaly event for the target traffic element is present at the target moment.

Herein, the operations of the foregoing units 501 to 504 of the detection apparatus 500 are respectively similar to the operations of steps S501 to S504 described above, and will not be repeated herein.

According to another aspect of the present disclosure, a traffic management and control system is further provided, and may comprise: the foregoing detection apparatus for a traffic anomaly event, configured to detect whether a traffic anomaly event occurs in a target traffic scenario; a control unit configured to execute a corresponding traffic management and control strategy in response to detecting that the traffic anomaly event occurs in the target traffic scenario.

According to another aspect of the present disclosure, an automated driving system is further provided, and may comprise: the foregoing detection apparatus for a traffic anomaly event, configured to detect whether a traffic anomaly event occurs in a target traffic scenario; a control unit configured to execute a corresponding path planning strategy in response to detecting that the traffic anomaly event occurs in the target traffic scenario.

According to another aspect of the present disclosure, an electronic device is further provided, and may comprise: a processor; and a memory that stores a program, the program comprising instructions that, when executed by the processor, cause the processor to perform the foregoing method.

According to another aspect of the present disclosure, a computer-readable storage medium storing a program is further provided, the program comprising instructions that, when executed by a processor of an electronic device, cause the electronic device to perform the foregoing method.

According to another aspect of the present disclosure, a computer program is further provided, the computer program comprising instructions, which when the program is executed by a computer, cause the computer to carry out the foregoing method.

Fig. 6 is a block diagram of an electronic device for a detection method for a traffic anomaly event according to an exemplary embodiment of the present disclosure. The electronic device is intended to represent various forms of digital computers, such as a laptop computer, a desktop computer, a workstation, a personal digital assistant, a server, a blade server, a mainframe computer, and other suitable computers. The electronic device may further represent various forms of mobile apparatuses, such as personal digital assistant, a cellular phone, a smartphone, a wearable device, and other similar computing apparatuses. The components shown herein, connections and relationships, and functions thereof are merely examples, and are not intended to limit the implementation of the present application described and/or required herein.

As shown in Fig. 6, the electronic device comprises: one or more processors 601, a memory 602, and an interfaces for connecting various components, comprising a high-speed interface and a low-speed interface. The various components are connected to each other by using different buses, and may be mounted on a common motherboard or in other manners as required. The processor may process instructions executed in the electronic device, comprising instructions stored in or on the memory to display graphical information of a GUI on an external input/output apparatus (such as a display device coupled to an interface). In other implementations, if required, the plurality of processors and/or a plurality of buses can be used together with a plurality of memories. Similarly, a plurality of electronic devices can be connected, and each device provides some of the necessary operations (for example, as a server array, a group of blade servers, or a multi-processor system). In Fig. 6, one processor 601 is used as an example.

The memory 602 is a non-transitory computer-readable storage medium provided in the present application. The memory stores instructions executable by the at least one processor, so that the at least one processor performs the detection method for a traffic anomaly event provided in the present application. The non-transitory computer-readable storage medium of the present application stores computer instructions, and the computer instructions are used to cause a computer to perform the detection method for a traffic anomaly event provided in the present application.

As a non-transitory computer-readable storage medium, the memory 602 can be used to store a non-transitory software program, and a non-transitory computer-executable program and module, such as program instructions/modules (for example, the acquisition unit 501, the first determination unit 502, the prediction unit 503, and the second determination unit 504 shown in Fig. 5) corresponding to the detection method for a traffic anomaly event in the embodiments of the present application. The processor 601 executes various functional applications and data processing of the server, that is, implements the detection method for a traffic anomaly event in the foregoing method embodiments, by running non-transitory software programs, instructions, and modules stored in the memory 602.

The memory 602 may comprise a program storage area and a data storage area, wherein the program storage area may store an operating system and an application program required by at least one function; and the storage data area can store data created according to the use of the electronic device that implements the detection method for a traffic anomaly event. Moreover, the memory 602 may comprise a high-speed random access memory, and may further comprise a non-transitory memory, such as at least one magnetic disk storage device, a flash memory device, or other non-transitory solid-state storage devices. In some embodiments, the memory 602 may optionally comprise memories disposed remotely relative to the processor 601, and these remote memories may be connected, through a network, to the electronic device that implements the detection method for a traffic anomaly event. Instances of the above network include, but are not limited to, the Internet, an enterprise intranet, a local area network, a mobile communications network, and a combination thereof.

The electronic device that implements the detection method for a traffic anomaly event may further comprise: an input apparatus 603 and an output apparatus 604. The processor 601, the memory 602, the input apparatus 603, and the output apparatus 604 may be connected through a bus or in other manners. In Fig. 6, the connection using a bus is taken as an example.

The input apparatus 603 can receive entered digit or character information, and generate a key signal input related to user settings and function control of the electronic device that implements the detection method for a traffic anomaly event, and may be input apparatuses such as a touchscreen, a keypad, a mouse, a trackpad, a touchpad, an indicator rod, one or more mouse buttons, a trackball, and a joystick. The output apparatus 604 may comprise a display device, an auxiliary lighting apparatus (such as an LED), a tactile feedback apparatus (such as a vibration motor), etc. The display device may include, but is not limited to, a liquid crystal display (LCD), a light-emitting diode (LED) display, and a plasma display. In some implementations, the display device may be a touchscreen.

Various implementations of the systems and technologies described herein can be implemented in a digital electronic circuit system, an integrated circuit system, an ASIC (application-specific integrated circuit), computer hardware, firmware, software, and/or a combination thereof. These various implementations may comprise: the systems and technologies are implemented in one or more computer programs, wherein the one or more computer programs may be executed and/or interpreted on a programmable system comprising at least one programmable processor. The programmable processor may be a dedicated or general-purpose programmable processor that can receive data and instructions from a storage system, at least one input apparatus, and at least one output apparatus, and transmit data and instructions to the storage system, the at least one input apparatus, and the at least one output apparatus.

These computing programs (also referred to as programs, software, software applications, or code) comprise machine instructions of a programmable processor, and can be implemented by using an advanced procedure and/or object-oriented programming languages, and/or assembly/machine languages. As used herein, the terms "machine-readable medium" and "computer-readable medium" refer to any computer program product, device, and/or apparatus (for example, a magnetic disk, an optical disc, a memory, a programmable logic device (PLD)) configured to provide machine instructions and/or data to a programmable processor, comprising a machine-readable medium that receives machine instructions as machine-readable signals. The term "machine-readable signal" refers to any signal used to provide machine instructions and/or data to a programmable processor.

In order to provide interaction with a user, the systems and technologies described herein can be implemented on a computer which has: a display apparatus (for example, a CRT (cathode-ray tube) or an LCD (liquid crystal display) monitor) configured to display information to the user; and a keyboard and pointing apparatus (for example, a mouse or a trackball) through which the user can provide an input to the computer. Other types of apparatuses can also be used to provide interaction with the user; for example, feedback provided to the user can be any form of sensory feedback (for example, visual feedback, auditory feedback, or tactile feedback), and an input from the user can be received in any form (including an acoustic input, voice input, or tactile input).

The systems and technologies described herein can be implemented in a computing system (for example, as a data server) comprising a backend component, or a computing system (for example, an application server) comprising a middleware component, or a computing system (for example, a user computer with a graphical user interface or a web browser through which the user can interact with the implementation of the systems and technologies described herein) comprising a frontend component, or a computing system comprising any combination of the backend component, the middleware component, or the frontend component. The components of the system can be connected to each other through digital data communication (for example, a communications network) in any form or medium. Examples of the communications network comprise: a local area network (LAN), a wide area network (WAN), and the Internet.

A computer system may comprise a client and a server. The client and the server are generally far away from each other and usually interact through a communications network. A relationship between the client and the server is generated by computer programs running on respective computers and having a client-server relationship with each other. The server may be a server in a distributed system, or a server combined with a blockchain. The server may alternatively be a cloud server, or an intelligent cloud computing server or intelligent cloud host with artificial intelligence technologies.

It should be understood that steps may be reordered, added, or deleted based on the various forms of procedures shown above. For example, the steps described in the present application can be performed in parallel, sequentially, or in a different order, provided that the desired result of the technical solutions disclosed in the present application can be achieved, this is not limited herein.

The foregoing embodiments do not constitute a limitation on the protection scope of the present application. Those skilled in the art should understand that various modifications, combinations, sub-combinations, and replacements can be made according to design requirements and other factors. Any modifications, equivalent replacements and improvements made within the spirit and principles of the present application shall fall within the protection scope of the present application.

**Claims**

1. A detection method for a traffic anomaly event, the detection method comprising:

   acquiring (S101) target traveling parameters of at least some traffic elements in a target traffic scenario corresponding to a target moment;
   determining (S102) a real traveling feature of each traffic element of the at least some traffic elements based on corresponding target traveling parameters;
   predicting (S103) a predictive traveling feature of a target traffic element in the at least some traffic elements based on real traveling features of traffic elements other than the target traffic element in the at least some traffic elements;

and

determining (S 104), based on the real traveling feature of the target traffic element and the predictive traveling feature of the target traffic element, whether an anomaly event for the target traffic element is present at the target moment.

2. The detection method of claim 1, wherein the determining a real traveling feature of each traffic element of the at least some traffic elements based on corresponding target traveling parameters comprises:

determining a plurality of historical moments before the target moment;

acquiring a historical traveling parameter of the traffic element at each of the plurality of historical moments;

extracting a plurality of historical traveling features of the traffic element based on the historical traveling parameter at each of the plurality of historical moments; and

determining the real traveling feature of the traffic element at the target moment based on a real traveling feature and the plurality of historical traveling features of the traffic element.

3. The detection method of claim 2, wherein the real traveling feature of the traffic element at the target moment is determined by using a recurrent neural network based on a real traveling feature and the plurality of historical traveling features of the traffic element.

4. The detection method of any of claims 1 to 3, wherein the predictive traveling feature of the target traffic element is predicted by using a graph neural network based on the real traveling features of the traffic elements other than the target traffic element in the at least some traffic elements.

5. The detection method of claim 4, comprising constructing the graph neural network including:

acquiring traveling parameters of at least some traffic element samples in a traffic scenario at a moment;

extracting real traveling features of the at least some traffic element samples based on at least corresponding traveling parameters;

establishing the graph neural network based on the real traveling features of the at least some traffic element samples at the moment;

predicting a predictive traveling feature of a target traffic element sample by using the graph neural network based on real traveling features of traffic element samples other than the target traffic element sample in the at least some traffic element samples; and

adjusting parameters of the graph neural network based on a real traveling feature of the target traffic element sample and the predictive traveling feature of the target traffic element sample.

6. The detection method of any of claims 1 to 5, wherein the determining whether an anomaly event for the target traffic element is present at the target moment includes:

in response to determining that an absolute difference between the real traveling feature of the target traffic element and the predictive traveling feature of the target traffic element is greater than a threshold, determining that an anomaly event for the target traffic element is present at the target moment.

7. The detection method of any of claims 1 to 6, wherein the target traveling parameters comprise at least one of:

a type of a traffic element, a location parameter, a traveling direction, or a traveling speed.

8. The detection method of claim 7, wherein the target traveling parameters further comprise a size parameter of the traffic element.

9. The detection method of claim 8, wherein the acquiring target traveling parameters of at least some traffic elements in a target traffic scenario at a target moment comprises:

acquiring a target image of the target traffic scenario at the target moment;

inputting the target image to a first convolutional neural network, and acquiring respective bounding boxes surrounding respective ones of the traffic elements and respective types of the respective ones of the traffic elements output by the first convolutional neural network; and

determining respective size parameters of the respective ones of the traffic elements based on the respective bounding boxes surrounding the respective ones of the traffic elements in the target image.

10. The detection method of any of claims 7 to 9, wherein the acquiring target traveling parameters of at least some traffic elements in a target traffic scenario at a target moment comprises:

capturing two consecutive frames of pictures from a video that includes the target traffic scenario, wherein a difference between the target moment and a timestamp of each of the two consecutive frames of pictures is less than specified duration, and the two consecutive frames of pictures each comprise the respective ones of the traffic elements; and

determining a traveling speed and a traveling direction of each of the traffic elements based on the two consecutive frames of pictures.

11. The detection method of any of claims 7 to 10, wherein the acquiring target traveling parameters of at least some traffic elements in a target traffic scenario at a target moment comprises:

acquiring a calibration parameter of a camera that shoots the video; and
calculating a location of each of the traffic elements based on the calibration parameter of the camera.

12. The detection method of any of claims 1 to 11, further comprising:

inputting the target traveling parameters to a second convolutional neural network, and extracting feature vectors of the target traveling parameters by using the second convolutional neural network, and
wherein the real traveling feature of each of the at least some traffic elements is determined based on a feature vector of a corresponding real traveling parameter.

13. A detection apparatus for a traffic anomaly event, the detection apparatus comprising:

an acquisition unit (501) configured to acquire target traveling parameters of at least some traffic elements in a target traffic scenario corresponding to a target moment;
a first determination unit (502) configured to determine a real traveling feature of each traffic element of the at least some traffic elements based on corresponding target traveling parameters;
a prediction unit (503) configured to predict a predictive traveling feature of a target traffic element in the at least some traffic elements based on real traveling features of traffic elements other than the target traffic element in the at least some traffic elements; and
a second determination unit (504) configured to determine, based on the real traveling feature of the target traffic element and the predictive traveling feature of the target traffic element, whether an anomaly event for the target traffic element is present at the target moment.

14. A computer-readable storage medium that stores a program, the program comprising instructions that, when executed by a processor of an electronic device, cause the electronic device to perform the method according to any of claims 1 to 12.

15. A computer program comprising instructions, which when the program is executed by a computer, cause the computer to carry out the method according to any of claims 1 to 12.

Acquire target traveling parameters of at least some traffic elements in a target traffic scenario corresponding to a target moment — S101

Determine a real traveling feature of each traffic element of the at least some traffic elements based on corresponding target traveling parameters — S102

Predict a predictive traveling feature of a target traffic element in the at least some traffic elements based on real traveling features of traffic elements other than the target traffic element in the at least some traffic elements — S103

Determine, based on the real traveling feature of the target traffic element and the predictive traveling feature of the target traffic element, whether an anomaly event for the target traffic element is present at the target moment — S104

*Fig. 1*

Determine a plurality of historical moments before the target moment — S1021

Acquire a historical traveling parameter of the traffic element at each of the plurality of historical moments — S1022

Extract a plurality of historical traveling features of the traffic element based on the historical traveling parameter at each of the plurality of historical moments — S1023

Determine the real traveling feature of the traffic element at the target moment based on a real traveling feature and the plurality of historical traveling features of the traffic element — S1024

*Fig. 2*

Historical traveling parameter at a historical moment t₀ | Historical traveling parameter at a historical moment t₁ | Historical traveling parameter at a historical moment t₂ | Real traveling parameter at a target moment t

Second convolutional neural network

Historical traveling feature at the historical moment t₀ | Historical traveling feature at the historical moment t₁ | Historical traveling feature at the historical moment t₂ | Traveling feature at the target moment t

Recurrent neural network

Real traveling feature at the target moment t

*Fig. 3*

Real traveling feature of a traffic element 0 | Real traveling feature of a traffic element 1 | Real traveling feature of a traffic element 2 | Real traveling feature of a traffic element 3 | Real traveling feature of a target traffic element 4

Graph neural network

Predictive traveling feature of the target traffic element 4

Comparison of the real traveling feature and the predictive traveling feature of the target traffic element 4

*Fig. 4*

Detection apparatus 500

Acquisition unit 501

First determination unit 502

Prediction unit 503

Second determination unit 504

Fig. 5

Memory —602

Input apparatus —603

Bus —

Processor —601

Output apparatus —604

Fig. 6

Europäisches
Patentamt

European
Patent Office

Office européen
des brevets

# EUROPEAN SEARCH REPORT

Application Number

EP 21 17 9045

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2018/122803 A1 (UNIV TONGJI [CN]; SHANGHAI INTELLIGENT TRANSP CO LTD ET AL.) 5 July 2018 (2018-07-05) * abstract * * paragraph [0003] - paragraph [0125] * * paragraph [0135] - paragraph [0194] * * figures 1-7 * | 1-15 | INV. G08G1/01 G06Q10/04 G06Q50/30 G08B25/00 |
| A | CN 110 675 623 A (INST AUTOMATION CAS ET AL.) 10 January 2020 (2020-01-10) * abstract * * paragraph [0075] - paragraph [0088] * * figure 4 * | 2-5,12 | ADD. G08G1/04 G08G1/052 G08G1/056 G06N3/02 G08B25/00 G08G1/015 |
| A | CN 110 648 527 A (UNIV ZHEJIANG TECHNOLOGY) 3 January 2020 (2020-01-03) * abstract * * paragraph [0037] * | 2-5 | |
| A | CN 106 023 605 A (TANG YIPING) 12 October 2016 (2016-10-12) * abstract * * paragraph [0059] - paragraph [0080] * | 8,9 | TECHNICAL FIELDS SEARCHED (IPC) |
| A | US 2019/012574 A1 (ANTHONY SAM [US] ET AL) 10 January 2019 (2019-01-10) * abstract * * paragraph [0035] * | 8,9 | G08G G08B G06Q G06N |
| A | US 2008/166023 A1 (WANG JIGANG [US]) 10 July 2008 (2008-07-10) * abstract * * paragraph [0012] * | 10 | |
| A | WO 2020/192464 A1 (ALIBABA GROUP HOLDING LTD [CN]) 1 October 2020 (2020-10-01) * abstract * * paragraph [0088] * | 11 | |

The present search report has been drawn up for all claims

| Place of search | Date of completion of the search | Examiner |
|---|---|---|
| The Hague | 2 November 2021 | Dujardin, Corinne |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 21 17 9045

This annex lists the patent family members relating to the patent documents cited in the above-mentioned European search report.
The members are as contained in the European Patent Office EDP file on
The European Patent Office is in no way liable for these particulars which are merely given for the purpose of information.

02-11-2021

| Patent document cited in search report | | | Publication date | Patent family member(s) | | Publication date |
|---|---|---|---|---|---|---|
| WO 2018122803 | A1 | | 05-07-2018 | CN | 109643485 A | 16-04-2019 |
| | | | | CN | 109716414 A | 03-05-2019 |
| | | | | CN | 109791729 A | 21-05-2019 |
| | | | | CN | 109844832 A | 04-06-2019 |
| | | | | CN | 109923595 A | 21-06-2019 |
| | | | | CN | 109997179 A | 09-07-2019 |
| | | | | CN | 110168520 A | 23-08-2019 |
| | | | | GB | 2569924 A | 03-07-2019 |
| | | | | GB | 2572717 A | 09-10-2019 |
| | | | | GB | 2582531 A | 23-09-2020 |
| | | | | GB | 2582532 A | 23-09-2020 |
| | | | | GB | 2587588 A | 31-03-2021 |
| | | | | GB | 2588556 A | 28-04-2021 |
| | | | | WO | 2018122585 A1 | 05-07-2018 |
| | | | | WO | 2018122801 A1 | 05-07-2018 |
| | | | | WO | 2018122802 A1 | 05-07-2018 |
| | | | | WO | 2018122803 A1 | 05-07-2018 |
| | | | | WO | 2018122804 A1 | 05-07-2018 |
| | | | | WO | 2018122805 A1 | 05-07-2018 |
| | | | | WO | 2018122806 A1 | 05-07-2018 |
| CN 110675623 | A | | 10-01-2020 | NONE | | |
| CN 110648527 | A | | 03-01-2020 | NONE | | |
| CN 106023605 | A | | 12-10-2016 | NONE | | |
| US 2019012574 | A1 | | 10-01-2019 | CN | 111542831 A | 14-08-2020 |
| | | | | EP | 3701418 A1 | 02-09-2020 |
| | | | | JP | 2021506046 A | 18-02-2021 |
| | | | | KR | 20200118410 A | 15-10-2020 |
| | | | | US | 2019012574 A1 | 10-01-2019 |
| | | | | US | 2019340465 A1 | 07-11-2019 |
| | | | | US | 2020293822 A1 | 17-09-2020 |
| | | | | WO | 2019112912 A1 | 13-06-2019 |
| US 2008166023 | A1 | | 10-07-2008 | CA | 2674830 A1 | 17-07-2008 |
| | | | | US | 2008166023 A1 | 10-07-2008 |
| | | | | US | 2011267460 A1 | 03-11-2011 |
| | | | | US | 2012229627 A1 | 13-09-2012 |
| | | | | US | 2014126780 A1 | 08-05-2014 |
| | | | | WO | 2008086293 A2 | 17-07-2008 |
| WO 2020192464 | A1 | | 01-10-2020 | CN | 111754581 A | 09-10-2020 |
| | | | | TW | 202036479 A | 01-10-2020 |
| | | | | WO | 2020192464 A1 | 01-10-2020 |

EPO FORM P0459

For more details about this annex : see Official Journal of the European Patent Office, No. 12/82

page 1 of 2

**ANNEX TO THE EUROPEAN SEARCH REPORT
ON EUROPEAN PATENT APPLICATION NO.**

EP 21 17 9045

This annex lists the patent family members relating to the patent documents cited in  the above-mentioned European search report.
The members are as contained in the European Patent Office EDP file on
The European Patent Office is in no way liable for these particulars which are merely given for the purpose of information.

02-11-2021

| Patent document cited in search report | Publication date | Patent family member(s) | Publication date |
|---|---|---|---|
| ------------------------------------------------------------------------------------ | | | |

EPO FORM P0459

For more details about this annex : see Official Journal of the European Patent Office, No. 12/82

page 2 of 2